# EUROPÄISCHE PATENTANMELDUNG

(11) **EP 0 969 156 A2**
(43) Veröffentlichungstag der Anmeldung: **05.01.2000**
(21) Anmeldenummer: 99112452.0
(22) Anmeldetag: 30.06.1999
(51) Int. Cl.: E04B 1/74

(54) **Dämmstoffkörper aus Stroh und Verfahren zu dessen Herstellung**

(30) Priorität: 01.07.1998 DE 19829261
(71) Anmelder: Schweitzer, Jacob, D-85591 Vaterstetten (DE); Vodermair, Hermann, D-85598 Baldham (DE); Schimmer-Wottrich, Renate, D-80805 München (DE)
(72) Erfinder: Brandauer, Edgar, Dr. Ing. habil., 06126 Halle (DE); Schweitzer, Jacob, 85591 Vaterstetten (DE)
(74) Vertreter: Kraft, Werner, Dipl.-Ing.(FH)

(57) **Zusammenfassung**

Die Erfindung betrifft einen Dämmstoffkörper aus Stroh und dessen Herstellungsverfahren.

Als Grundstoffe sind beliebige Strohsorten, Schilf, Gras und ähnliche zellulosehaltige Naturprodukte bzw. auch nur Bestandteile dieser Grundstoffe vorgesehen, die sortenrein oder in Mischung verwendet werden können. Der Dämmstoffkörper an sich ist für Isolationszwecke, insbesondere für die Wärmeisolierung geeignet. Die faserige Grundstruktur der Einsatzstoffe bleibt weitestgehend erhalten und ist auch im fertigen Dämmstoffkörper deutlich erkennbar. Die Fasern haben eine Länge größer 2 mm.

Feinkorn ist weitestgehend entfernt. Die einzelnen Stroh- bzw. Faserabschnitte sind in regellos gemischter Form partiell miteinander verbunden, bewirkt durch ein dauerhaft wirkendes Bindemittel. Weitere Zuschlagstoffe zur Erzielung bestimmter Stoffeigenschaften, wie beispielsweise Flammschutz, Hydrophobie oder Resistenz gegenüber Schädlingsbefall, können enthalten sein.

Vorteilhafterweise sind eine obere und eine untere Kaschierungslage und/oder wenigstens eine Sperrschicht als Zwischenlage vorhanden. Diese bestehen vorzugsweise aus Zellulosevlies. Unter Umständen kann auf diese Lagen auch gänzlich verzichtet werden.

Erfindungsgegenstand ist weiterhin ein Verfahren zur Herstellung dieses Strohkörpers.

## Beschreibung

Die Erfindung betrifft einen Dämmstoffkörper aus Stroh und dessen Herstellungsverfahren.

Als Grundstoffe sind beliebige Strohsorten, Schilf, Gras und ähnliche zellulosehaltige Naturprodukte bzw. auch nur Bestandteile dieser Grundstoffe vorgesehen, die sortenrein oder in Mischung verwendet werden können. Der Dämmstoffkörper an sich ist für Isolationszwecke, insbesondere für die Wärmeisolierung geeignet.

Bekanntermaßen können Formteile aus Pflanzenmaterial hergestellt werden. Es handelt sich hierbei überwiegend um gepreßte Körper mit einer relativ hohen Dichte, die als Futtermittel in Pelletform Verwendung finden. Ein Verfahren zur Herstellung solcher haltbar verdichteter Pflanzen- und Faserstoffe ist in DE 32 33 121 beschrieben. Hier wird das Preßgut durch Bedampfen oder mittels fein verteilter Wassertröpfchen befeuchtet, anschießend verdichtet und und weiter einer Wärmebehandlung unter Einsatz von Mikrowellenbestrahlung ausgesetzt. Eine Vorzerkleinerung ist nicht vorgesehen.

In DE 42 11 888 werden Ganzpflanzenformteile vorgestellt, die ein wesentlich breiteres Einsatzspektrum haben, nämlich als Verpackungsmaterialien, Gehäuse, Behälter, Isolationsmaterialien und Baumaterialien mit ökologisch vorteilhafter Entsorgbarkeit.

In Form von angepaßten Formteilen, Sandwiches oder waffelartig profilierten Elementen dienen diese als ökologisch interessantes Isoliermaterial.

Fein zerkleinertes Ganzpflanzenmaterial wird durch Zusatz von Wasser und gegebenenfalls anderer Zuschlagstoffe zu einen Teig, einem Ganzpflanzenhomogenisat, verarbeitet. Dieses Ausgangsmaterial wird dann in Analogie zu Backverfahren bzw. Holzspanpreßverfahren zu besagten Formteilen weiterverarbeitet. Die so hergestellten Formteile können z.B. durch Einfärben, Kaschieren, Bedrucken, Beschichten oder Verkleben weiter konfektioniert werden.

In Betracht zu ziehen ist auch die Herstellung eines Sandwiches aus dein o.g. Ausgangsmaterial, indem dieses in Formen geliert bzw. dem Backprozeß unterworfen wird, die mit Holzfurnieren, Papieren, Filzen, Schaumstoffen, Pappen, Spanplatten, Geweben, Gewirken, Vliesen, Gestricken, Kunststoff- oder Metallfolien ganz oder teilweise ausgekleidet sind.

Die Ganzpflanzenformteile erscheinen, insbesondere wenn sie als Isolierkörper vorgesehen sind, als aufwendig herstellbar, weil ein hoher Energieeintrag erforderlich ist, um ausreichend Hohlräume im fertigen Körper zur Verfügung zu haben. Außerdem wird ein hoher Zerkleinerungsaufwand notwendig, da Pflanzenteile mit unterschiedlicher Festigkeit bearbeitet werden müssen.

Aufgabengemäß soll deshalb ein hochporöser Körper aus Pflanzenmaterial, insbesondere aus Stroh, entwickelt werden, der mit wenig mechanischem und Wärmeenergieaufwand herstellbar und vorzugsweise für Wärmeisolationszwecke verwendbar ist. Diese Aufgabe wurde nach den Merkmalen des Anspruch 1 gelöst.

Außerdem ist ein Verfahren zur Herstellung dieses Dämmstoffkörpers anzugeben. Die Aufgabenlösung ist in Anspruch 2 angegeben.

Als Ausgangsmaterial für den erfindungsgemäßen Dämmstoffkörper sind beliebige Strohsorten, Schilf, Gras und ähnliche zellulosehaltige Naturprodukte bzw. auch nur Bestandteile dieser Grundstoffe vorgesehen, die sortenrein oder in Mischung verwendet werden können. Optional besteht die Möglichkeit, weitere Naturprodukte bzw. andere geeignete Materialien als Zuschlagstoffe einzusetzen.

Das im fertigen Dämmstoffkörper enthaltene Stroh bzw. die genannten Einsatzstoffe sind soweit zerkleinert, daß deren faserige Grundstruktur erhalten und deutlich erkennbar ist.

Die Fasern sollten wenigstens 2 mm lang sein. Nach oben ist die Faserlänge nicht begrenzt, während Feinkorn unerwünscht ist. Die einzelnen Stroh- bzw. Faserabschnitte sind in regellos gemischter Form partiell miteinander verbunden. Der Verbund ist dauerhaft durch ein Bindemittel realisiert. Weitere Zuschlagstoffe zur Erzielung bestimmter Stoffeigenschaften, wie beispielsweise Flammschutz, Hydrophobie oder Resistenz gegenüber Schädlingsbefall, können enthalten sein. Der Dämmstoffkörper kann in beliebiger Dicke kontinuierlich oder diskontinuierlich hergestellt werden. Die äußere Form ist in Abhängigkeit vom Herstellungsverfahren frei wählbar. Die Festigkeit und innere Struktur des erfindungsgemäßen Dämmstoffkörpers hängt im wesentlichen von den Eigenschaften des Einsatzmaterials, vorzugsweise Stroh, und der gewählten Faserlänge ab.

Neben den beschriebenen Merkmalen wird weiterhin erfindungsgemäß vorgeschlagen, den Dämmstoffkörper mit Kaschierungen und Sperrschichten zu versehen. Als Material dafür hat sich Zellulosevlies bewährt. Die Kaschierungen, bei plattenförmigen Körpern an der Ober- und Unterseite angebracht, stellen eine gewisse Konfektionierung dar.

Dadurch lösen sich weniger Strohteilchen beim späteren Handling ab.

Die Sperrschichten, aber auch die Kaschierungen, dienen dazu, den Wärme- und Feuchtigkeitsdurchgang durch den Dämmstoffkörper dahingehend zu beeinflussen, daß die Wärmeisolationsfähigkeit weiter verbessert und der diffusive Feuchtigkeitstransport nicht unterbunden wird, was für die Isolierung von Gebäuden, vorzugsweise Dachinnenflächen, von großer Bedeutung ist.

Somit steht ein Isolierkörper zur Verfügung, der aus ökologischer Sicht unbedenklich ist, weil dieser aus reinen nachwachsenden Naturprodukten besteht und leicht recyclebar ist, weiterhin weil dieser vielseitig verwendbar, vorteilhaft zur Gebäudeisolierung, und darüberhinaus ökonomisch herstellbar ist.

Verfahrensseitig wurde teilweise auf bewährte und an sich bekannte Verfahrensschritte zurückgegriffen. Ebenso werden nachfolgend Verfahrensschritte angegeben, die als erfindungsgemäß anzusehen sind, weil diese aus dem Stand der Technik nicht direkt herleitbar waren.

Im einzelnen läuft das Herstellungsverfahren für einen im vorstehenden Text beschriebenen Dämmstoffkörper wie folgt ab:
- Zerkleinerung des Einsatzmaterials, im folgenden Text nur noch mit Stroh bezeichnet, in geeigneten Zerkleinerungs-, Zerfaserungs- oder Mahleinrichtungen.
   Der Feuchtigkeitsgehalt des Strohs ist dabei in gewissen Grenzen, die durch die verwendete Gerätetechnik gesetzt sind, unerheblich. Im Ergebnis sollen Stroh- bzw. Strohfaserabschnitte in Längen über 2 mm zur Verfügung stehen. Die Faserlänge ist nach oben prinzipiell unbegrenzt.
- Abtrennen des Feinkorns durch Sichtung oder Siebung;
- Schonende Mischung der Ausgangsstoffe in einer geeigneten Mischeinrichtung,
   wobei weitestgehend gesichert ist, daß eine weitere Zerkleinerung der Strohbestandteile vermieden wird; Der Mischprozeß läuft in der Weise ab, daß zunächst das im Schritt 1 und 2 vorbehandelte Stroh vorgelegt wird, daß dann flüssige oder pastöse Stoffe zugesetzt und schließlich pulverförmige Stoffe untergemischt werden.
   Als Zuschlagstoffe kommen in Frage:
   1. Wasser, das pH- neutral bzw. alkalisch, z.B. durch Zusatz von Natriumhydroxid, eingestellt ist;
   2. Bindemittel, vorzugsweise auf Stärkebasis;
   3. Stoffe, die die Einstellung bestimmter Eigenschaften im Fertigprodukt bewirken, beispielsweise Borsalze oder Borsäuren, einzeln oder in Mischung, zur Erzielung eines Flammschutzes, oder Stearinverbindungen, um hydrophobe Eigenschaften zu erreichen.
- Dosierung der vorbeschriebenen Mischung auf ein Transportband mit Seitenbegrenzung bzw. in eine Bearbeitungsform. Auf dem Transportband bzw. in der Form befindet sich eine untere Kaschierungslage aus Zellulosevlies oder anderem geeignetem Material, auf die dosiert wird, indem man die Mischung in der gewünschten Dicke gleichmäßig aufstreut.
   Zum Einbringen von Zwischenlagen (Sperrschichten) ist das Aufsteuen jeweils zu unterbrechen und dann in der beschriebenen Art und Weise fortzusetzen. Als obere abschließende Schicht ist ebenfalls eine Kaschierungslage aufzulegen.
   Die Kaschierungslagen und die Sperrschichten bestehen vorteilhaft aus dem gleichen Material, was allerdings nicht als zwingende Bedingung zu sehen ist. Bedarfsweise kann auf die Kaschierungslagen, wie auch auf die Sperrschichten, gänzlich verzichtet werden.
   Die Dicke der Produktschüttung richtet sich nach den Isolieranforderungen an den späteren Dämmstoffkörper bzw. ist von den apparativen Gegebenheiten abhängig.
   Gegebenenfalls kann die Produktschüttung durch Druckrollen bei kontinuierlicher Fertigung oder durch Druckplatten bei Einzelfertigung leicht verdichtet werden.
   Thermische Behandlung der beschickten Bearbeitungsform bzw. der Bearbeitungszone Auf dem Transportband durch Mikrowellenbestrahlung mit teilweise gleichzeitiger bzw. anschließender Konvektionierung (Trocknen und Verfestigen);
   Die Mikrowellenbestrahlung bewirkt ein gleichmäßiges Erwärmen der Schüttung, das Verdampfen des Wassers und die Aktivierung des Bindemittels. Die dünne Bindemittelschicht auf dem Stroh wird aufgeschäumt und in der Folge verfestigt.
- Konfektionierung und Verpackung der fertigen Strohkörper.

Als erfindungsrelevant sind aus der Sicht des Anmelders folgende oben näher beschriebene Verfahrensmerkmale anzusehen:
1. Der Zerkleinerungsprozeß des Strohs in dessen Ergebnis Stroh- bzw. Strohfaserabschnitte in Längen ab 2 mm zur Verfügung stehen.
2. Die nach oben hin unbegrenzte Faserlänge;
3. Das Aushalten des Feinkorns;
4. Die schonende weitestgehend zerstörungsfreie Mischung der Ausgangsstoffe;
5. Die Abfolge der Zudosierung innerhalb des Mischprozesses (Stroh, flüssige oder pastöse Stoffe, pulverförmige Stoffe);
6. Die Verwendung von pH- neutralem bzw. alkalisch eingestelltem Wasser;
7. Das Einbringen von Kaschierungslagen innerhalb des Herstellungsverfahrens ohne Zusatzschritte oder -apparaturen;
8. Das Einbringen von Sperrschichten ebenfalls innerhalb des Herstellungsverfahrens ohne Zusatzschritte oder -apparaturen.

Nachfolgend wird ein Ausführungsbeispiel der Erfindung angegeben.

Ein für Wärmeisolationszwecke vorgesehener flächiger Strohkörper mit definierter Dicke, der zusätzlich hydrophobe Eigenschaften besitzt, hat folgenden Aufbau:
Als Ausgangsmaterial wurde Weizenstroh ausgewählt. Dieses kommt im fertigen Strohkörper zerkleinert, in faseriger Grundstruktur vor, wobei die Faserlängen überwiegend im Bereich zwischen 2 bis 40 mm liegen. Überlängen sind im geringen Anteil vorhanden. Feinkorn unter 2 mm Faserlänge ist, wenn überhaupt, nur in vernachlässigbaren Mengen im Strohkörper enthalten.

Die einzelnen Stroh- bzw. Faserabschnitte sind in regellos gemischter Form partiell miteinander verbunden. Der Verbund ist dauerhaft durch ein Bindemittel realisiert. Als Bindemittel dient ein Stärkeprodukt, nämlich Ceresan, als modifiziertes ladungsneutrales Getreidepolymer.

Zur Erzielung eines bestimmten Entflammbarkeitsgrades enthält der Strohkörper Borverbindungen.

Hydrophobe Eigenschaften werden durch enthaltene Stearinverbindungen erzielt.

Für einen vollständig trockenen Strohkörper ohne Hydrophobierungsmittel wird folgende Zusammensetzung angegeben: 47 % Weizenstroh, 26,5 % Bindemittel und 26,5 % Borverbindungen.

Darüberhinaus besitzt der Strohkörper eine obere und untere Kaschierungslage, sowie mehrere Sperrschichten in Abständen von 1,5 bis 2 cm. Als Material für die Kaschierungs- und Sperrschichten ist Zellulosevlies vorgesehen.

Verfahrensseitig wird der im Beispiel beschriebene erfindungsgemäße Strohkörper in der Weise hergestellt, daß zunächst das Weizenstroh aufbereitet wird, und zwar durch Zerkleinerung in einer Schneidmühle und Abtrennen des Feinkorns durch Sichtung oder Siebung. Im Ergebnis steht ein Gemisch von Stroh- bzw. Strohfaserabschnitten zur Verfügung. Die Faserlängen liegen beim Beispielkörper im Bereich zwischen 2 und 40 mm. Längere Fasern sind in geringer Anzahl vorhanden. Der Feinkornanteil ist vernachlässigbar klein, praktisch nicht mehr enthalten. Das zur Verfügung stehende Gemisch aus Strohfasern wird nachfolgend in einer geeigneten Mischeinrichtung weiterverarbeitet, indem zuerst Wasser, das durch Zugabe von Natriumhydroxid alkalisch eingestellt ist, dann Bindemittel und schließlich Hydrophobierungs- und Flammschutzmittel zugesetzt werden.

Dieses Gemisch wird auf eine untere Kaschierungslage, die zuvor in eine Bearbeitungsform gegeben wurde, gleichmäßig aufgestreut.

Auf die Strohschicht wird im gewünschten Abstand eine Sperrschicht aufgelegt, usw. bis schließlich die letzte Strohschicht mit der oberen Kaschierungslage bedeckt werden kann.

Um Wiederholungen zu vermeiden wird in diesem Zusammenhang zusätzlich auf die Ausführungen zum Strohkörper selbst verwiesen.

Die so gefüllte Bearbeitungsform wird abschließend mit einer Druckplatte von geringem Gewicht, vorzugsweise aus Plastmaterial bestehend, abgedeckt.

In einem nachfolgenden Verfahrensschritt wird thermisch mittels Mikrowellenstrahlung behandelt, so lange, bis der Körper voll durchgewärmt ist. Die Maximaltemperatur liegt bei ca. 100°C. Nach einer kurzen Trocknungs- und Abkühlungsphase kann der Strohkörper entnommen und weiter konvektioniert werden.

Bei der vorgesehenen industriemäßigen Verarbeitung empfiehlt es sich, einen kontinuierlichen Prozeß unter Nutzung fachüblicher technischer Mittel zu wählen. Abschließend können die fertigen Strohkörper bei Bedarf konfektioniert und verpakt werden.

## Patentansprüche

1. Dämmstoffkörper aus Stroh, gekennzeichnet dadurch, daß dieser aus zerkleinertem Stroh beliebiger Sorten, Schilf, Gras und/oder ähnlichen zellulosehaltigen Naturprodukten bzw. auch nur aus Bestandteilen dieser Grundstoffe, die sortenrein oder in Mischung Verwendung finden, besteht, wobei die faserige Grundstruktur weitestgehend erhalten und auch im fertigen Strohkörper deutlich erkennbar ist, daß die Faserlängen im Bereich über 2 mm liegen und Feinkorn weitestgehend entfernt ist, daß die einzelnen Stroh- bzw. Faserabschnitte in regellos gemischter Form partiell miteinander verbunden sind, realisiert mittels eines dauerhaft wirkenden Bindemittels, daß weitere Zuschlagstoffe zur Erzielung bestimmter Stoffeigenschaften, wie beispielsweise Flammschutz, Hydrophobie oder Resistenz gegenüber Schädlingsbefall, enthalten sein können, und daß eine obere und eine untere Kaschierungslage und wenigstens eine Sperrschicht als Zwischenlage, alle vorzugsweise aus bestehend aus Zellulosevlies, vorgesehen sind, sofern nicht gänzlich auf Kaschierungslagen und Sperrschichten verzichtet werden soll.

2. Verfahren zur Herstellung eines Dämmstoffkörpers aus Stroh, gekennzeichnet durch folgende Verfahrensschritte:
- Zerkleinerung von Stroh, Schilf, Gras und/oder ähnlichen zellulosehaltigen Naturprodukten bzw. deren Bestandteilen in geeigneten Zerkleinerungs-, Zerfaserungs- oder Mahleinrichtungen mit dem Ergebnis, daß nach Beendigung des Zerkleinerungsprozesses Stroh- bzw. Strohfaserabschnitte über 2 mm Länge zur Verfügung stehen;
- Abtrennen des Feinkorns durch Sichtung oder Siebung;
- Schonende Mischung der Stroh- bzw. Strohfaserabschnitte in einer geeigneten Mischeinrichtung, vorzugsweise einer Schneidmühle, unter weitestgehender Vermeidung der weiteren Zerkleinerung;
- Durchführung des Mischprozesses in der Weise, daß dem vorgelegten Strohausgangsgemisch zunächst flüssige oder pastöse Stoffe und nachfolgend pulverförmige Stoffe untergemischt werden, wobei als Zuschlagstoffe Wasser, das PH- neutral bzw. alkalisch, z.B. durch Zusatz von Natriumhydroxid, eingestellt ist, und Bindemittel, vorzugsweise auf Stärkebasis, zwingend vorgesehen sind, und wobei Stoffe, die die Einstellung bestimmter Eigenschaften im Fertigprodukt bewirken, beispielsweise Borsalze oder Borsäuren, einzeln oder in Mischung, zur Erzielung eines Flammschutzes, oder Stearinverbindungen, um hydrophobe Eigenschaften zu erreichen, eingesetzt werden können;
- Dosierung der vorbeschriebenen Mischung auf ein Transportband mit Seitenbegrenzung bzw. in eine Bearbeitungsform in vorgegebener Dicke und eventuell unter Einbringen einer oberen und unteren Kaschierungslage und wenigstens einer Sperrschicht als Zwischenlage, alle vorzugsweise bestehend aus Zellulosevlies;
- Gegebenenfalls leichtes Andrücken der Produktschüttung durch Druckrollen bei kontinuierlicher Fertigung oder durch Druckplatten bei Einzelfertigung;
- Thermische Behandlung der beschickten Bearbeitungsform bzw. der Bearbeitungszone auf dem Transportband durch Mikrowellenbestrahlung mit teilweise gleichzeitiger bzw. anschließender Konvektion (Trocknen und Verfestigen);
- Konfektionierung und Verpackung der fertigen Strohkörper.
